# EUROPEAN PATENT SPECIFICATION

(11) **EP 3 619 043 B1**
(45) Date of publication and mention of the grant of the patent: **22.07.2026**
(21) Application number: 19744839.2
(22) Date of filing: 14.05.2019
(51) Int. Cl.: D06N 7/00, C09J 7/21, C09J 7/29, B32B 37/12

(54) **METHOD FOR PRODUCING A SELF-ADHESIVE TEXTILE**
VERFAHREN ZUR HERSTELLUNG EINES SELBSTKLEBENDEN TEXTILS
PROCÉDÉ DE FABRICATION D'UN TEXTILE AUTO-ADHÉSIF

(30) Priority: 14.05.2018 NL 2020918
(43) Date of publication of application: 11.03.2020
(73) Proprietor: Lampe Textiles NV, 8700 Tielt (BE)
(72) Inventor: LAMPE, Philippe, 8700 Tielt (BE)
(74) Representative: Jilderda, Anne Ayolt
(86) International application number: PCT/IB2019/053985
(87) International publication number: WO 2019/220339

(56) References cited:
- EP-A1- 2 946 954
- FR-A- 1 288 390
- FR-A1- 2 944 226
- JP-U- H0 735 699

## Description

The present invention relates to a method for producing a self-adhesive textile wherein a transparent, or at least translucent textile is provided with adhesive over at least substantially a whole main surface. The invention relates particularly here to a transparent or semi-transparent textile, in particular a fabric or a knit, which can be arranged on a transparent surface and which makes it possible to look into a space with a higher light intensity from a space with a lower light intensity but which prevents looking into a space with a lower light intensity from a space with a higher light intensity. Such a textile is applied particularly in interiors, usually as window decoration or as visual separation and furnishing of transparent doors and partition walls.

Textile fabric is used as window decoration in the form of curtains and net curtains. The curtains and/or net curtains are usually applied on an inner side of an outside window in order to wholly or partially conceal an indoor space from view from outside. This gives the residents an enhanced sense of privacy and moreover provides atmosphere and the proverbial warmth. Also available commercially as alternative to curtains are translucent and printed plastic films which are intended to be adhered to a window and which impart a diffuse scattering or partial translucence to the light passing therethrough. Such films are therefore also able to reduce incident light and/or keep out curious glances, although such plastic films lack the attractive aesthetic appearance characteristic of textile. These films moreover obstruct the view. In addition, it is not always so easy for everyone to arrange such films wrinkle-free and without enclosed air bubbles.

These and other drawbacks are obviated to at least great extent by a self-adhesive textile which can be arranged on a surface. Because use is made here of textile, this imparts the aesthetic appearance and feel which are the natural characteristics of textile, and the fine-mesh structure thereof particularly obstructs the view inside from outside, though less so from inside to outside. Such a textile is known from an earlier patent application of applicant, namely the Belgian patent application BE 2014/0570. Described therein is a self-adhesive textile fabric which is unique and in many respects innovative and which is highly suitable for the above described and other applications.

A drawback of the known self-adhesive textile is however that it requires a delicate production process. In order to preserve the open structure of the fine-mesh textile in this known textile fabric a lick roller is used with which a pasty adhesive liquid is applied on one side which only just contacts the yarns of the fabric and does not penetrate between them, or hardly so. The contact with the yarns thus takes adhesive liquid from the lick roller without this penetrating the meshes between the textile yarns. This process does however require precise setting in respect of the contact pressure exerted on the textile by the lick roller as well as the viscosity of the adhesive liquid. Partly because of a temperature sensitivity of this latter factor this known process is therefore control-critical and requires the necessary knowledge and skill.

Although this process has proven its value and enables production of a self-adhesive textile with sufficient adhesive properties, there is a need to provide a process which is less critical and which is therefore easier to scale up to larger production volumes and a greater reproducibility.

A method according to the prior art is disclosed in FR 2 944 226 A1. The method comprises applying a silicone layer at the liquid state in a proportion of 150 g/m² on a transfer paper, applying a flexible article on the silicone layer to produce a lamination, and heating the resulting lamination by continuously passing it in a furnace having a temperature of 100-160° C and speed of 10-30 m/minute. The lamination undergoes laser cutting according to the desired shape of the flexible article.

The present invention has for its object, among others, to fulfil this need by providing a method for producing a self-adhesive textile wherein the risk of clogging the meshes in the textile is obviated to at least significant extent.

The present invention is directed to a method for producing a self-adhesive textile as defined in the appended claims.

In order to achieve the stated object a method of the type described in the preamble has the feature according to the invention that the adhesive is applied in the form of an optionally continuous adhesive layer to an optionally temporary carrier film, that the adhesive layer located on the carrier film is brought into contact with the textile and that the adhesive is deposited here onto the textile from the carrier film. The adhesive is thus transferred in more or less solid, optionally pasty state in the form of a defined layer from the carrier film and applied to the textile, where the layer of adhesive comes into contact with the yarns. The adhesive, which is to a great extent dimensionally stable, does not run out, or hardly so, and there is therefore no danger of the mesh/pores of the textile being filled. With removal of the carrier film the adhesive which is insufficiently adhered to the textile is also removed, for instance at locations where it has not contacted any textile yarn. The fine-mesh and fibrous character of the textile is thus retained on the visible side. Because this is to great extent a self-regulating process and the adhesive does not flow, or hardly so, it is less critical and allows for simple upscaling to large production volumes.

An important aspect of the self-adhesive textile is the translucent character thereof that must be retained as far as possible. In order to ensure that the adhesive layer not only does not fill or hardly fills gaps between the threads of the textile, and is also not applied behind them, a preferred embodiment of the method according to the invention has the feature that the adhesive is applied in the form of a discontinuous adhesive layer to a temporary carrier film and is transferred from the carrier film to the textile. The adhesive layer lies here as a non-continuous layer on the carrier, whereby only those parts which come into contact with the threads of the textile will adhere. No contact takes place in the gaps (meshes) between the threads and no adhesive will therefore be taken up. These layer parts remain behind on the carrier film and are removed together with the temporary carrier film. The result is a self-adhesive, or at least adhering textile which will carry adhesive precisely where the threads of the textile are located but not between them, or hardly so, so that the original translucent character of the textile is retained unimpaired.

A particular embodiment of the method according to the invention has in this latter respect the feature that the adhesive layer is arranged in the form of a structure of adhesive areas spatially separated from each other on the carrier film, particularly in the form of a system of congruent islands. The adhesive layer thus comprises a system of mutually separate adhesive areas, so that only the adhesive areas which come into contact with the textile yarns will be transferred to the textile and the rest remain behind on the carrier film and are removed together therewith.

In order to enhance such a selective transfer of the adhesive a particular preferred embodiment has the feature according to the invention that the textile comprises intersecting yarns with a yarn thickness, and that the adhesive areas have a maximum dimension and a mutual pitch which is smaller than the yarn thickness. This ensures that the threads of the textile will always make contact with one or more of such adhesive areas during the transfer of the adhesive onto the textile, while the meshes between them will remain clear of adhesive.

The present invention relates particularly to a self-adhesive textile such as a fabric or knit which is adherable to a transparent surface such as a window or transparent partition wall. The textile obtained with the method allows looking into a space with a higher light intensity from a space with a lower light intensity but prevents looking into a space with a lower light intensity from a space with a higher light intensity. The textile comprises for this purpose a fine-mesh network of threads, or yarns, which are preferably shear-resistant relative to each other.

This means that the threads have substantially no freedom of movement relative to each other and has the result that the threads hardly move relative to each other, or even not at all, particularly when the textile is subjected to shear forces such as can inevitably be the case when the textile is arranged on a surface. This is important because the textile would otherwise display local irregularities. In the case of fabrics the intersections between the warp and weft threads thus adhere to each other, whereby warp and weft can no longer shift relative to each other. The fabric hereby becomes stronger and does not fray when cut. The elasticity and shrinkage of the fabric is also greatly reduced by the impregnation so that there is less chance of deformation during arranging thereof on a surface, such as a transparent surface.

This desired shear resistance of the threads can be obtained by impregnating the threads with a fixing agent such as polyvinyl alcohol (PVA). A particular embodiment of the method according to the invention therefore has the feature that the textile is impregnated with a fixing agent which mutually connects intersecting threads before the adhesive is arranged. By impregnating the threads the fixing agent is introduced deeply into the thread, between the fibres thereof. After drying of the textile the fixing agent is condensed and the fibres of the threads are well adhered to each other. Impregnation of the threads with a fixing agent can take place by means of padding. The threads can be impregnated before or after they have been processed to form a textile.

In a preferred embodiment the method according to the invention is characterized in that the fixing agent is a liquid acrylate with which the textile is impregnated. The adhesive can also be an acrylate. In a preferred embodiment the method according to the invention is characterized in that the fixing agent and the adhesive are by nature selected from the same, or at least similar chemical family of compounds. When the fixing agent with which the fibres of the textile have been saturated and the adhesive are of the same family, for instance though non-limitatively in that acrylates are applied for both, it is then moreover found that an exceptionally strong mutual adhesion is achieved between the impregnated threads of the textile and the adhesive. Not only does this prevent a lateral translation of the fibres relative to each other, it also prevents the textile detaching from the adhesive, so that a better attachment of the textile to the surface, in particular a transparent surface, is obtained.

An acrylate is found to be particularly favourable as base material for impregnating the threads and as self-adhesive layer on the textile because it is UV-resistant, withstands ageing well and is not very temperature-sensitive. In addition, acrylate is easy to process and has a low density. An acrylate is also particularly suitable as adhesive for providing the textile on one side with a self-adhesive layer with which the textile will be arranged on a transparent surface. Because of the stability of the applied acrylate adhesive the textile is in such a case also little susceptible to ageing and not very temperature-sensitive, whereby the textile will adhere to the transparent surface at both high and low temperatures.

An alternative or further embodiment of the method according to the invention which mutually fixes the threads of the textile is characterized in that a bonding is physically imposed here on mutually touching threads which allows substantially no freedom of relative movement of the threads. This is possible by using threads which consist partially of melt fibres or which consist of two-component fibres, wherein a part of the material is melted by the action of heat and pressure on the textile. After weaving or knitting of the textile a meltable part can for instance be melted or softened in an oven. Through flow of the material the fibres will adhere to each other and particularly intersections between the threads will adhere well to each other. The threads can hereby no longer shift relative to each other and shrinkage and creep of the textile are prevented. In a textile according to embodiments of the present invention the two-component fibre or the melt fibre can consist of polyolefin. A polyolefin is particularly suitable for fusing within a limited temperature range and for obtaining sufficient flow between the fibres. Polyolefins can further withstand ageing well, and are easy to process.

It is already possible during the production of the textile to at least significantly enhance fixing of the position of the threads thereof. For mutual fixing of the warp and weft threads in a fabric use can for instance be made of specific bondings which ensure that the threads have no or substantially no freedom of movement relative to each other. An example of such a bonding is a gauze bonding or linen bonding. Other types of bonding between warp and weft threads are also possible in the case of a fabric. In the case of a knit a fixation of the threads can be achieved by ladder-proof knitting in warp knit, also referred to as run-resistant. It is an advantage of a run-resistant knit that the threads within the knit are shear-resistant and so cannot easily move relative to each other. For an even better holding of the position of the threads, the threads of such fabrics can moreover be impregnated with a fixing agent as has been specified above.

A textile applied in the embodiments of the method according to the present invention comprises sufficient threads to make it possible to look from a space with a lower light intensity into a space with a higher light intensity and also to prevent looking into a space with a lower light intensity from a space with a higher light intensity. In the case of a fabric the number of warps and wefts necessary to achieve this characteristic depends here on the type of thread and the diameter of the thread used. The openings, i.e. the meshes, of the fabric must on the one hand be sufficiently large to enable transparency in the one direction (dark to light), and they must on the other be sufficiently small to prevent looking through in the other direction (light to dark). Multifilament threads are advantageously applied for the threads. Compared to monofilament threads, multifilament threads have a higher absorption capacity for a fixing agent and provide a better attachment to the adhesive applied.

The present invention relates particularly to a process with which such a textile is provided on one side with an adhesive layer without having any adverse effect at all on the appearance and character of the textile or the optical effect and function thereof. In a particular embodiment the method according to the invention is characterized for this purpose in that the carrier film comprises a temporary carrier film which is removed from the adhesive layer after the adhesive layer has been transferred from the carrier film onto the textile. The carrier film can serve here solely to transfer the adhesive layer to the textile, wherein the adhesive layer is for instance then covered with a protective sheet, or a protective sheet can be applied for this purpose which remains present until the textile is arranged on a surface, wherein the protective sheet is peeled off.

In a further particular embodiment the method according to the invention is characterized in that the carrier film comprises a permanent carrier film comprising a transparent, or at least translucent film which is adhered on a side facing toward the textile to the textile and carries the adhesive layer on an opposite side. The carrier film is therefore not only a transporter for the adhesive arranged on the textile, the carrier film is also combined with the textile, providing the desired adhesive layer here on the side remote from the textile. The carrier film thus imparts permanent mechanical properties to the textile, such as for instance stiffness and shrinkage resistance.

A particular embodiment of the method according to the invention has the feature here that the film carries a further adhesive layer on the side facing toward the textile and is adhered to the textile through interposing thereof. An alternative embodiment has the feature that the film comprises a transparent, or at least translucent thermoplastic and is fused to the textile by supplying heat. In both cases a more or less permanent attachment is achieved between the film and the textile, wherein the film provides the (self-adhesive) attaching layer on the textile.

With a suitable choice of said film the optical properties of the textile can be modified or retained as desired. With this latter in mind, a further particular embodiment of the method according to the invention has the feature that a clear film is applied, in particular of a plastic from a group comprising polyesters, polycarbonate, polystyrene, polymethyl methacrylate and polypropylene, more particularly a clear polyester film, in particular of polyethylene terephthalate (PET). The clear nature of such a film leaves the optical properties of the textile substantially unaffected in respect of translucence and/or transparency from a one side and obstruction of the view from the opposite side.

In order to be able to wind the textile onto a roll after processing and to guard against contamination of the adhesive layer, a further embodiment of the method according to the invention has the feature that the adhesive layer is covered with a protective sheet, in particular siliconized paper. The (siliconized) top layer of the protective sheet here provides comparatively little adhesion to the adhesive layer, so that the protective sheet is easily peeled off but until that moment keeps the adhesive layer fresh and free of contamination. This increases the storage life of the textile for as long as it has not yet been arranged.

In order to enhance a warm effect of the textile on the one hand and an adequate adhesion to the adhesive layer on the other, a further particular embodiment of the method according to the invention has the feature that the textile is obtained by processing fibrous yarn, in particular by weaving or knitting multifilament yarn, and that a fibrous character of the yarn is retained. The method according to the invention more particularly has the feature here that the yarn comprises a synthetic yarn, in particular a polyester yarn.

The application of such multifilament yarn provides a relatively high absorption capacity and suction capacity for an optionally applied impregnating agent for the purpose of fixing the fibres, and moreover provides an enlarged attachment surface area for interaction with the adhesive. The application of polyester yarns combines particularly well here with fixing agents and adhesives to be applied, particularly when these are acrylate-based. A further particular embodiment of the method according to the invention has in this respect the feature that the adhesive layer comprises a glue from a group comprising transparent thermoplastic resins and rubber glues, in particular a transparent acrylate resin.

The invention will now be further elucidated with reference to a number of exemplary embodiments and an accompanying drawing. In the drawing:
- Figure 1: shows schematically a first exemplary embodiment of the method according to the invention;
- Figures 2A-2B: show schematically a second exemplary embodiment of the method according to the invention;
- Figure 3: shows schematically a third exemplary embodiment of the method according to the invention;
- Figure 4: shows schematically a fourth exemplary embodiment of the method according to the invention;
- Figure 5: shows schematically a fifth exemplary embodiment of the method according to the invention; and
- Figure 6: shows a top view of the carrier film with adhesive layer as applied in the exemplary embodiment of figure 5.

The figures are otherwise purely schematic and not (always) drawn to scale. Some dimensions in particular may be exaggerated to greater or lesser extent for the sake of clarity. Corresponding parts are designated in the figures with the same reference numeral.

The invention provides a textile 20 which is adherable to a surface, in particular a transparent surface, such as for instance glass.

The textile makes it possible to look from a space with a lower light intensity, for instance indoors, into a space with a higher light intensity, for instance outside, and at the same time prevent looking into a space with a lower light intensity, such as indoors, from a space with a higher light intensity, for instance outside. The textile can for this purpose be arranged for instance on a glass pane of a window or a door. In order to obtain this one-way view effect the textile must be constructed so that the diameter of the threads and the size of the openings (meshes) between the threads are of a magnitude that, in the case of daylight outside and no light inside, looking outside is easy while looking inside is difficult. Different thread diameters here allow different mesh sizes. In an advantageous embodiment the ratio of mesh area to overall area is about 40%. In addition, such a textile also results in a limitation of the view through transparent partition walls in offices, dwellings and other buildings.

Textile 20 can be a woven textile with intersecting warp and weft threads, or a knit. The threads used for textile 20 are preferably multifilament threads. Such a thread consists of diverse fibres of the same or differing material which run adjacently of each other or are intertwined. The fibres can be of natural as well as synthetic origin. Examples of fibres of natural origin are for instance cotton, flax, viscose, hemp, wool, jute, sisal and coconut fibre. Examples of suitable materials for synthetic fibres are polyester, polyolefins, polyamides and acryl. The threads can also be composed of mixtures of natural fibres and synthetic fibres.

Textile 20 is preferably modified such that the threads thereof have substantially no freedom of relative movement. The threads in the textile can be fixed in order to make the threads shear-resistant. The threads can for this purpose be impregnated, i.e. deeply saturated, with a suitable fixing agent. This can take place either before the weaving or knitting or after the threads have been processed to form a textile. Impregnation is possible for instance by immersion of the thread or the textile in a fixing agent, wherein the thread absorbs the fixing agent. This absorption can take place in that the material of the fibres itself absorbs fixing agent, such as for instance in the case of cotton, viscose, flax and other natural yarns, or in that the fixing agent settles on, around and between the different fibres through capillary action, such as for instance in the case of synthetic multifilament fibres.

An increased pressure can be applied in order to enhance the absorption of the fixing agent. Following immersion of the textile in a fixing bath it can be pressed, for instance by being guided between rollers, in order to remove excess fixing agent. This combination of immersion and pressing is also referred to as padding. During this pressing step not only is excess fixing agent removed, a part of the fixing agent is also pushed into the threads.

Other suitable impregnation techniques can likewise be applied according to the present invention, for instance atomizing of fixing agent, rubbing the fixing agent as a layer onto the textile, or applying the fixing agent to the textile via a foam application. It is important in each of these methods that suitable measures are taken so that the meshes in the textile remain at least partially open so that the one-way view is retained. This can be achieved by selectively arranging the fixing agent substantially only on and in the threads or, if fixing agent has nevertheless entered meshes 15, by once again clearing these openings, for instance by targeted passage of airflows.

Suitable fixing agents are, among others, polyacrylates, polyurethanes, polyvinyl alcohols, polyvinyl acetates and starch derivatives. As also in the present examples, an aqueous acrylate dispersion can particularly be used as impregnating agent. This material has the advantage of displaying a high degree of UV resistance and being little susceptible to ageing. After 100% polymerization acrylates are wholly water-insoluble, so that the treated textile is little susceptible to the action of moisture. Following impregnation and optional pressing, textile 20 is dried, whereby the water evaporates and the acrylate condenses to form a strengthening material. The applied acrylate dispersion can particularly be a mixture of a hard acrylate, a soft acrylate and water.

Hard acrylate is a polymerized acrylate with hard properties resulting from complete condensation of a polymer acrylate dispersion. Such a polymer acrylate dispersion applied as substrate to textile imparts a hard property to the textile after condensation. An example of a hard acrylate is TUBICOAT A 41, available commercially from CHT-BEZEMA.

Soft acrylate is a polymerized acrylate with soft adhesive properties resulting from complete condensation of a polymer acrylate dispersion. Such a polymer acrylate dispersion applied to a textile substrate will cause threads and fibres to mutually adhere after condensation. An example of a soft acrylate is TUBICOAT A 22, available commercially from CHT-BEZEMA.

Impregnation ensures on the one hand that the threads of textile 20 themselves acquire an increased strength in that the fibres thereof adhere to each other. This moreover ensures that the textile as a whole acquires additional strength, since the intersections between the threads also adhere to each other. This ensures that textile 20 acquires the desired shear resistance, wherein the threads can no longer shift relative to each other. The extra strength of the textile is advantageous when textile 20 is arranged on a surface. Textile 20 is hereby also fray-free, for instance during cutting. In addition, the elasticity of textile 10 also decreases considerably as a result of such an impregnation, whereby the textile will be less susceptible to stretch and crimp and, after and during arrangement, will thus not deform, or hardly so. The impregnation also provides for a better adhesion of an adhesive applied later, and ensures that as little adhesive as possible has to be applied while sufficient adhesive force is nevertheless achieved. It is important here that the character and the appearance of the textile is retained, also after the impregnation.

Another way of making the textile shear-resistant is to work with threads which consist in part of melt fibres or which consist of two-component fibres. Textiles formed herefrom can be made shear-resistant by melting on the meltable part, for instance by having the textile pass through a hot air oven or by exposure to an infrared field. The layer of melting material will hereby melt and the threads will fuse together at intersections and thus adhere to each other. Use can also be made of specific weaving or knitting techniques with which a mutual shear resistance of the threads can be obtained, such as for instance a gauze bonding in the case of fabrics or ladder-proof knitting.

Once the textile has thus acquired its desired shear resistance, a (self-)adhesive layer 35 of a suitable adhesive is provided on one side thereof. This may be an uninterrupted, i.e. continuous layer, but also a discontinuous layer, for instance in the form of a dot pattern. Any suitable adhesive which is able to adhere a textile to a smooth surface can in principle be used. Particularly suitable is a transparent acrylate resin. This has the advantage of being UV-resistant and able to withstand ageing. Acrylate is moreover not very temperature-sensitive, so that the glue retains its adhesive force at both low and high temperatures. The transparency of the applied adhesive is comparable here to the intended transparency of the textile. An acrylate-based adhesive is preferably a soft acrylate with soft adhesive properties which is permanently self-adhesive. An example of an acrylate adhesive is TUBICOAT STC 100, available from CHT-BEZEMA.

When the threads of the textile have been impregnated in order to fix the threads, it is advantageous to apply an adhesive from the same family as the fixing agent, for instance both acrylates or both polyurethanes, because of their good adhesion to each other. Use is therefore made of the above specifically stated acrylates for both in the following examples. It is important when arranging the adhesive that the meshes in the textile also remain open and the textile retains its fibrous character. The present invention provides for this purpose a method with which this is guaranteed. A number of embodiments thereof intended to be non-limitative will be further elucidated below.

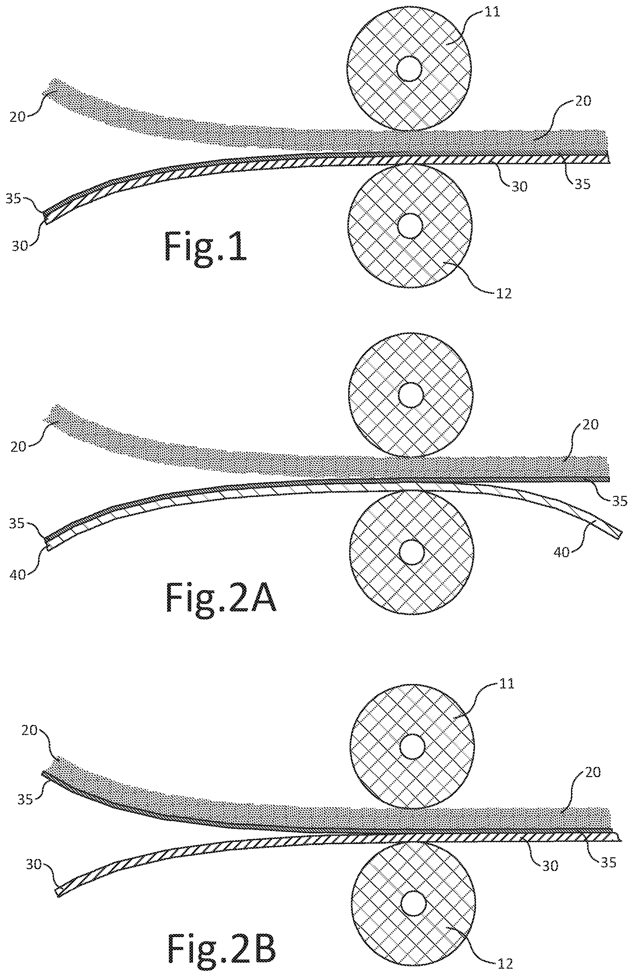

Shown schematically in figure 1 is a setup for performing an exemplary embodiment of the method according to the invention. The setup comprises a set of rollers 11,12 which are precisely aligned relative to each other and also define a mutual gap between which a first substrate and a second substrate can be fed while a regulated pressure is exerted thereon. This process can optionally be thermally supported by heating one or both rollers 11,12. This process, also referred to as calendering, provides for a mutual pressing force and adhesion between the two substrates and serves as starting process for the exemplary embodiment of the method according to the invention to be described here. In the context of the invention other methods and techniques are optionally also possible for combining a carrier film provided with an adhesive layer with a textile in order to transfer the adhesive layer to the textile.

In figure 1 a textile 20 is applied as first substrate. This is a fabric of polyester with a fine-mesh structure which gives an attractive see-through effect on a transparent surface. This effect is responsible for a relative transparency from close-by on a first side, while a view from a distance is obstructed on an opposite side. Use is advantageously made hereof per se in the case of net curtains and other window covering to obstruct a view from outside to inside while nevertheless providing a view to outside.

Serving as second substrate in the case of figure 1 is a protective sheet 30 and an adhesive layer 35 lying thereon. The protective sheet comprises a paper with a siliconized surface, and for this reason is also referred to as silicone paper. Applied as adhesive layer in this example is a thermoplastic acrylate resin, also referred to as hot melt. Other glues, in particular rubber glues, can however also be applied in the context of the invention.

The modified surface of protective sheet 30 adheres to adhesive layer 35 with relatively little adhesive force which is sufficient to protect and seal adhesive layer 35 until it is used. By guiding both substrates 20,30,35 between rollers 11,12 the adhesive layer 35 is transferred from protective sheet 30 onto the textile, where adhesive 35 enters into a stronger adhesion with the textile fibres. The protective sheet serves here as semi-permanent carrier film and is peeled off the textile during application. Adhesive possibly not adhering (in the meshes of the textile) to textile fibres is here also wholly or partially removed.

A wholly temporary carrier film can also be applied for the invention for the sole purpose of adhering the adhesive layer to the textile. An example hereof is shown in figures 2A and 2B. In the first instance an adhesive layer 35 is transferred here from a temporary film 40 onto the textile, see figure 2A, and the temporary carrier film 40 is then peeled away. The textile thus provided with an adhesive layer 35 is then laminated with a protective sheet 30 in order to seal and protect adhesive layer 35, see figure 2B. The application of such a separate temporary carrier film 40 provides more freedom of choice in respect of the nature and composition of carrier film 40 and adhesive layer 35. Applied once again in this example for the adhesive layer is an acrylate resin and use is made for the temporary carrier film 40 of plastic film of polyester.

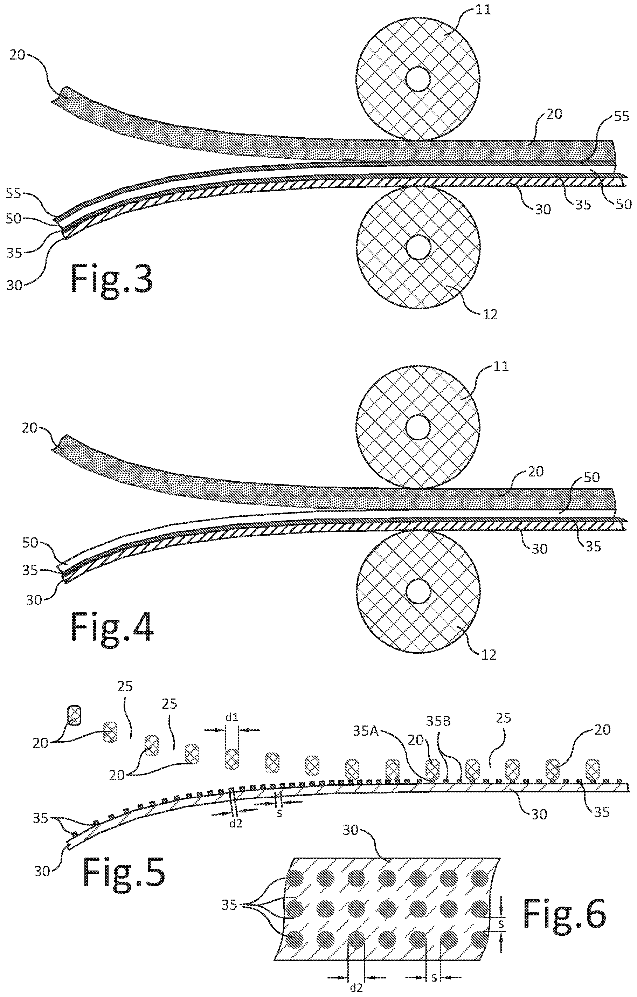

Instead of or in addition to a temporary or semi-temporary carrier film 30,40 as in the previous examples, use can also be made of a permanent carrier film for adhesive layer 35. Figure 3 shows an example hereof. Carrier film 50 not only serves here as transport means for adhesive layer 35 but also remains behind on the textile. In order to retain the translucent properties of the textile here, use is advantageously made of a clear plastic film as permanent carrier film 50. In this example use is made in this respect of a polyester (PET) film. This is provided on a first side with an adhesive layer 35 with which textile 20 can be adhered to a surface. Lying thereon on the other side is a further adhesive layer 55 which serves to adhere film 50 permanently to textile 20. Use is advantageously made here for both adhesive layers 35,55 of a transparent PSA acrylate resin so as not to affect the transparency of the meshes in the textile. The thus assembled carrier film 30,35,50,55 and textile 20 are guided through the calender rollers and here glued to each other. Prior to use the protective sheet 30 is peeled away and the fabric laminated with film 50 is adhered via adhesive layer 35 to a surface.

Instead of being glued, such a permanent carrier film 50 can also be combined with the textile by thermo-lamination. This is shown in figure 4. Also applied in this example as permanent carrier film 50 is a polyester film, on a first side of which lies the adhesive layer 35 covered with a backing paper 30. Carrier film 50 is clear on the other side and carrier film 50 is fused with textile 20 through the action of pressure and heat from rollers 11,12.

A carrier film with adhesive layer as applied in a fifth and preferred embodiment of the method according to the invention is shown in figures 5 and 6. This embodiment is substantially the same as, or at least similar to, that of either figure 1 or figures 2A and 2B. The description given there in respect of respectively the first and second exemplary embodiment also applies here *mutatis mutandis.* In this example however, adhesive layer 35 is not provided as connected, continuous layer on a temporary or semi-permanent carrier film 30 but comprises a system of adhesive areas 34,34A,34B spatially separated from each other. Figure 5 shows an enlargement of textile fabric 20 in the form of separate threads with a free intermediate space 25 therebetween which provides the textile with its translucent quality. The threads have a thread thickness d1.

As shown in the example of figure 6, the adhesive layer comprises a system of mutually congruent islands 34, each with a largest dimension d2 and mutual pitch which is significantly smaller than the thread thickness d1. Only the adhesive islands/areas 34A which come into contact with yarn 20 of the textile will be taken up by the textile. Intermediate adhesive islands/areas 35B are on the other hand not transferred, since they fall inside an intermediate space 25, and remain behind on carrier film 30 and removed together therewith sooner (as in a similar embodiment such as that of 2A and 2B) or later (as in a similar embodiment such as that of figure 1). Because of the small pitch s one or more of such islands 34A will eventually be deposited on all threads 20. Ultimately however, there is only adhesive on textile 20 where a thread 20 is also present, and meshes/pores 25 therebetween in the textile remain wholly free of adhesive. This contributes significantly toward an undiminished transparency and beauty of the textile, while a sufficient adhesive force is nevertheless imparted thereto with which the textile can be adhered reliably against a surface, in particular a transparent surface of glass.

Although the invention has been further elucidated above with reference to only a single exemplary embodiment, it will be apparent that the invention is by no means limited thereto. On the contrary, many variations and embodiments are still possible within the scope of the invention for a person with ordinary skill in the art. Thus shown in figure 6 is a regular pattern of circular adhesive islands, though a less regular pattern of round islands or an optionally regular pattern of islands of the same shape or of differing shape can also be selected instead. Use can particularly also be made of a striped pattern of mutually parallel tracks with a track width d2 and mutual pitch which is considerably smaller than the thread thickness d1 of the yarn.

## Claims

1. Method for producing a self-adhesive transparent, or at least translucent textile, wherein an adhesive is applied over substantially an entire main surface of said textile, comprising the steps of:
a. providing a transparent, or at least translucent textile (20) of threads and openings between the threads;
b. providing a carrier film (30, 40, 50) carrying a continuous or discontinuous adhesive layer (35) in a solid or pasty state; and
c. bringing said adhesive layer, located on the carrier film, into contact with said textile;
wherein a first part of said adhesive layer is transferred from said carrier film to said threads of said textile, and
wherein a second part of said adhesive is removed at said openings of said textile by removing said carrier film carrying said second part of said adhesive layer.

2. Method as claimed in claim 1, **characterized in that** the adhesive is applied in the form of a discontinuous adhesive layer (35) to a temporary carrier film (30) and is transferred from the carrier film to the textile.

3. Method as claimed in claim 2, **characterized in that** the adhesive layer (35) is arranged in the form of a structure of adhesive areas (35A,35B) spatially separated from each other on the carrier film (30), particularly in the form of a system of congruent islands.

4. Method as claimed in claim 3, **characterized in that** the textile comprises intersecting yarns (20) with a yarn thickness (d1), and that the adhesive areas (35A,35B) have a maximum dimension (d2) and a mutual pitch (s) which is smaller than the yarn thickness (d1).

5. Method as claimed in one or more of the preceding claims, wherein the carrier film comprises a temporary carrier film (40) and the adhesive layer (35) is transferred from the carrier film onto the textile (20), **characterized in that** the carrier film is removed from the adhesive layer after the adhesive layer has been transferred from the carrier film onto the textile.

6. Method as claimed in claim 1, **characterized in that** the carrier film comprises a permanent carrier film (50) comprising a transparent, or at least translucent film which is adhered on a side facing toward the textile to the textile and carries the adhesive layer (35) on an opposite side.

7. Method as claimed in claim 6, **characterized in that** the film carries a further adhesive layer (55) on the side facing toward the textile and is adhered to the textile through interposing thereof.

8. Method as claimed in claim 6, **characterized in that** the film (50) comprises a transparent, or at least translucent thermoplastic and is fused to the textile by supplying heat.

9. Method as claimed in one or more of the claims 6-8, **characterized in that** for the film (50) a clear film is applied, in particular of a plastic from a group comprising polyesters, polycarbonate, polystyrene, polymethyl methacrylate and polypropylene, more particularly a clear polyester film, in particular of polyethylene terephthalate (PET).

10. Method as claimed in one or more of the preceding claims, **characterized in that** the adhesive layer (35) is covered with a protective sheet (30), in particular siliconized paper.

11. Method as claimed in one or more of the preceding claims, **characterized in that** the textile (20) is obtained by processing fibrous yarn, in particular by weaving or knitting multifilament yarn, and that a fibrous character of the yarn is retained.

12. Method as claimed in claim 11, **characterized in that** the yarn comprises a synthetic yarn, in particular a polyester yarn.

13. Method as claimed in one or more of the preceding claims, **characterized in that** the adhesive layer (35) comprises a glue from a group comprising transparent thermoplastic resins and rubber glues, and in particular comprises an acrylate resin.

## Patentansprüche

1. Verfahren zum Herstellen eines selbstklebenden transparenten oder zumindest lichtdurchlässigen Textils, wobei ein Klebstoff über im Wesentlichen eine gesamte Hauptoberfläche des Textils aufgebracht wird, umfassend die Schritte:
a. Bereitstellen eines transparenten oder zumindest lichtdurchlässigen Textils (20) aus Fäden und Öffnungen zwischen den Fäden;
b. Bereitstellen eines Trägerfilms (30, 40, 50), der eine kontinuierliche oder diskontinuierliche Klebstoffschicht (35) in einem festen oder pastösen Zustand trägt; und
c. In-Kontakt-Bringen der Klebstoffschicht, die sich auf dem Trägerfilm befindet, mit dem Textil;
wobei ein erster Teil der Klebstoffschicht von dem Trägerfilm auf die Fäden des Textils übertragen wird, und
wobei ein zweiter Teil des Klebstoffs an den Öffnungen des Textils entfernt wird durch Entfernen des Trägerfilms, der den zweiten Teil der Klebstoffschicht trägt.

2. Verfahren wie beansprucht im Anspruch 1, **dadurch gekennzeichnet, dass** der Klebstoff in der Form einer diskontinuierlichen Klebstoffschicht (35) auf einen temporären Trägerfilm (30) aufgebracht wird und von dem Trägerfilm auf das Textil übertragen wird.

3. Verfahren wie beansprucht im Anspruch 2, **dadurch gekennzeichnet, dass** die Klebstoffschicht (35) in der Form einer Struktur von Klebstoffbereichen (35A, 35B), die räumlich voneinander getrennt sind, auf dem Trägerfilm (30) angeordnet ist, insbesondere in der Form eines Systems von kongruenten Inseln.

4. Verfahren wie beansprucht im Anspruch 3, **dadurch gekennzeichnet, dass** das Textil sich kreuzende Garne (20) mit einer Garndicke (d1) umfasst, und dass die Klebstoffbereiche (35A, 35B) eine maximale Abmessung (d2) und einen gegenseitigen Abstand (s) haben, der kleiner ist als die Garndicke (d1).

5. Verfahren wie beansprucht in einem oder mehreren der vorhergehenden Ansprüche, wobei der Trägerfilm einen temporären Trägerfilm (40) umfasst und die Klebstoffschicht (35) von dem Trägerfilm auf das Textil (20) übertragen wird, **dadurch gekennzeichnet, dass** der Trägerfilm von der Klebstoffschicht entfernt wird, nachdem die Klebstoffschicht von dem Trägerfilm auf das Textil übertragen worden ist.

6. Verfahren nach Anspruch 1, **dadurch gekennzeichnet, dass** der Trägerfilm einen permanenten Trägerfilm (50) umfasst, der einen transparenten oder zumindest lichtdurchlässigen Film umfasst, der auf einer zu dem Textil gerichteten Seite an dem Textil angehaftet wird und die Klebstoffschicht (35) auf einer gegenüberliegenden Seite trägt.

7. Verfahren wie beansprucht im Anspruch 6, **dadurch gekennzeichnet, dass** der Film auf der zu dem Textil gerichteten Seite eine weitere Klebstoffschicht (55) trägt und durch deren Zwischenschaltung an dem Textil angehaftet wird.

8. Verfahren wie beansprucht im Anspruch 6, **dadurch gekennzeichnet, dass** der Film (50) ein transparentes oder zumindest lichtdurchlässiges Thermoplast umfasst und durch Zuführen von Wärme mit dem Textil verschmolzen wird.

9. Verfahren wie beansprucht in einem oder mehreren der Ansprüche 6-8, **dadurch gekennzeichnet, dass** für den Film (50) ein klarer Film verwendet wird, insbesondere aus einem Kunststoff aus einer Gruppe umfassend Polyester, Polycarbonat, Polystyrol, Polymethylmethacrylat und Polypropylen, ganz insbesondere ein klarer Polyesterfilm, insbesondere aus Polyethylenterephthalat (PET).

10. Verfahren wie beansprucht in einem oder mehreren der vorhergehenden Ansprüche, **dadurch gekennzeichnet, dass** die Klebstoffschicht (35) mit einer Schutzfolie (30), insbesondere silikonisiertem Papier, bedeckt ist.

11. Verfahren wie beansprucht in einem oder mehreren der vorhergehenden Ansprüche, **dadurch gekennzeichnet, dass** das Textil (20) durch Verarbeiten von faserigem Garn erhalten wird, insbesondere durch Weben oder Wirken von Multifilamentgarn, und dass ein faseriger Charakter des Garns beibehalten wird.

12. Verfahren wie beansprucht im Anspruch 11, **dadurch gekennzeichnet, dass** das Garn ein synthetisches Garn umfasst, insbesondere ein Polyestergarn.

13. Verfahren wie beansprucht in einem oder mehreren der vorhergehenden Ansprüche, **dadurch gekennzeichnet, dass** die Klebstoffschicht (35) einen Kleber aus einer Gruppe umfassend transparente thermoplastische Harze und Gummikleber umfasst, und insbesondere ein Acrylatharz umfasst.

## Revendications

1. Procédé de fabrication d'un textile transparent ou au moins translucide autocollant, un adhésif étant appliqué sur la quasi-totalité de la surface principale dudit textile, comprenant les étapes suivantes :
a. un textile transparent ou au moins translucide (20) composé de fils et d'ouvertures entre les fils ;
b. fournir un film support (30, 40, 50) portant une couche adhésive continue ou discontinue (35) à l'état solide ou pâteux ; et
c..mettre en contact ladite couche adhésive, située sur le film support, avec ledit textile ;
une première partie de ladite couche adhésive étant transférée du ledit film support aux fils dudit textile, et
une deuxième partie de l'adhésif étant enlevée au niveau des ouvertures du textile en enlevant le film support de la deuxième partie de la couche d'adhésif.

2. Procédé selon la revendication 1, **caractérisé par le fait que** l'adhésif est appliqué sous la forme d'une couche adhésive discontinue (35) sur un film support temporaire (30) et est transféré du film support au textile.

3. Procédé selon la revendication 2, **caractérisé par le fait que** la couche adhésive (35) est disposée dans le film support (30), notamment sous la forme d'un système d'îlots congruents.

4. Procédé selon la revendication 3, **caractérisé par le fait que** le textile comprend des fils entrecroisés (20) avec une épaisseur de fil (d1), et que les zones adhésives (35A, 35B) ont une dimension maximale (d2) et un pas mutuel (s) qui est inférieur à l'épaisseur de fil (d1).

5. Procédé selon l'une ou plusieurs des revendications précédentes, le film support comprenant un film support temporaire (40) et la couche adhésive (35) est transférée du film support sur le textile (20), **caractérisé par le fait que** le film support est retiré du textile.

6. Procédé selon la revendication 1, **caractérisé par le fait que** le film support comprend un film support permanent (50) comprenant un film transparent, ou au moins translucide, qui est collé sur une face tournée vers le textile et porte la couche adhésive (35) sur une face opposée.

7. Procédé selon la revendication 6, **caractérisé par le fait que** le film porte une autre couche adhésive (55) sur la face tournée vers le textile et qu'il adhère au textile en l'interposant.

8. Procédé selon la revendication 6, **caractérisé par le fait que** le film (50) est constitué d'un thermoplastique transparent ou au moins translucide et qu'il est fusionné au textile par apport de chaleur.

9. Procédé selon l'une ou plusieurs des revendications 6 à 8, **caractérisé par le fait que** l'on applique sur le film (50) un film transparent, notamment en matière plastique appartenant à un groupe comprenant les polyesters, le polycarbonate, le polystyrène, le polyméthacrylate de méthyle et le polypropylène, plus particulièrement un film transparent en polyester, notamment en polyéthylène téréphtalate (PET).

10. Procédé selon l'une ou plusieurs des revendications précédentes, **caractérisé par le fait que** la couche adhésive (35) est recouverte d'une feuille de protection (30), en particulier de papier siliconé.

11. Procédé selon l'une ou plusieurs des revendications précédentes, **caractérisé par le fait que** le textile (20) est obtenu par traitement de fils fibreux, notamment par tissage ou tricotage de fils multifilaments, et **par le fait que** le caractère fibreux du fil est conservé.

12. Procédé selon la revendication **11, caractérisé par le fait que** le fil comprend un fil synthétique, en particulier un fil de polyester.

13. Procédé selon l'une ou plusieurs des revendications précédentes, **caractérisé par le fait que** la couche adhésive (35) comprend une colle appartenant à un groupe comprenant des résines thermoplastiques transparentes et des colles de caoutchouc, et en particulier une résine acrylate.
